Europäisches Patentamt

European Patent Office

Office européen des brevets

(19)

(11) Numéro de publication : **0 064 462**
**B1**

(12) **FASCICULE DE BREVET EUROPÉEN**

(45) Date de publication du fascicule du brevet :
09.01.85

(21) Numéro de dépôt : 82400787.6

(22) Date de dépôt : 30.04.82

(51) Int. Cl.⁴ : **G 21 C 17/04**

(54) Réacteur nucléaire à neutrons rapides comportant un cœur constitué par des assemblages combustibles et un dispositif pour la localisation des assemblages combustibles défectueux.

(30) Priorité : 30.04.81 FR 8108634

(43) Date de publication de la demande :
10.11.82 Bulletin 82/45

(45) Mention de la délivrance du brevet :
09.01.85 Bulletin 85/02

(84) Etats contractants désignés :
BE DE GB IT NL

(56) Documents cités :
EP-A- 0 013 216
DE-A- 2 305 327
FR-A- 1 436 676
GB-A- 949 108
GB-A- 976 367

(73) Titulaire : **NOVATOME**
**20 Avenue Edouard Herriot**
**F-92350 Le Plessis Robinson (FR)**

(72) Inventeur : **Paziaud, Alain**
**103 rue Brancas**
**F-92310 Sevres (FR)**

(74) Mandataire : **Bouget, Lucien et al**
**CREUSOT-LOIRE 15 rue Pasquier**
**F-75383 Paris Cedex 08 (FR)**

## Description

L'invention concerne un réacteur nucléaire à neutrons rapides comportant un cœur constitué par des assemblages combustibles et un dispositif pour la localisation des assemblages combustibles défectueux.

Les réacteurs nucléaires à neutrons rapides refroidis par du métal liquide comportent un cœur constitué par des assemblages combustibles disposés côte à côte et en contact par leurs faces latérales dans une cuve contenant le métal liquide de refroidissement du réacteur, généralement du sodium liquide. Le sodium liquide de refroidissement des assemblages ou sodium primaire, est mis en circulation par des pompes. Le sodium en circulation traverse le cœur de bas en haut, dans la direction longitudinale des assemblages, si bien que la sortie du cœur se trouve à sa partie supérieure.

Chacun des assemblages constituant le cœur est lui-même constitué d'un ensemble de tubes ou aiguilles de grande longueur constitués par un matériau de gainage renfermant les matériaux combustibles fissile ou fertiles.

Dans ce type de réacteur, il est très important de détecter rapidement les fissures pouvant apparaître dans le matériau de gainage de certains assemblages pendant le fonctionnement du réacteur. La détection de ces ruptures de gaines peut se faire par mise en évidence de produits de fission dans le métal liquide constituant le fluide de refroidissement du réacteur. En effet, dans le cas d'une rupture de gaine, les produits de fission sont libérés par le matériau combustible dans le fluide de refroidissement en contact avec la surface externe de la gaine.

La localisation des assemblages combustibles défectueux peut se faire de façon précise en opérant des prélèvements de métal liquide de refroidissement au voisinage de ces assemblages du côté de la sortie du cœur c'est-à-dire au niveau de la partie supérieure du cœur par laquelle le métal liquide échauffé ressort du cœur.

On dispose donc au-dessus du cœur un ensemble de conduites de prélèvement, chacune des conduites de cet ensemble étant associée à un assemblage combustible, et l'on relie l'extrémité de ces conduites opposées à l'extrémité de prélèvement disposée au-dessus de l'assemblage, à des moyens de repérage et de localisation des assemblages défectueux, par détection de produits de fission dans le fluide de refroidissement.

Ces moyens de repérage et de localisation sont regroupés pour constituer un ou plusieurs modules appelés modules de localisation de rupture de gaine (LRG) implantés dans la dalle recouvrant la cuve au-dessus du cœur du réacteur.

Ces modules comportent généralement des sélecteurs et des moyens de mesure tels que des compteurs de neutrons qui permettent d'effectuer des analyses sur les prélèvements relatifs à chacun des assemblages successivement et de déterminer les assemblages pour lesquels le fluide de refroidissement renferme des produits de fission traduisant une fuite au niveau de l'assemblage considéré.

Dans le cas des réacteurs nucléaires à neutrons rapides construits actuellement, le nombre d'assemblages du cœur est généralement voisin de 500, ce qui nécessite la présence d'un même nombre de tubes de prélèvement liés au moyen de sélection et de mesure.

Il a donc paru préférable d'utiliser plusieurs modules à chacun desquels on relie les conduites de prélèvement correspondant aux assemblages disposés dans une région déterminée du cœur. On peut également associer deux modules interconnectés à chacune des régions du cœur pour effectuer simultanément la détection globale des fuites et leur localisation. (EP-A 0 013 216). Chacun des modules est associé aux assemblages situés dans une partie de la région du cœur considéré.

Les modules de localisation comportent des organes mobiles ou fragiles qui doivent rester en activité pendant toute la durée de fonctionnement du réacteur, tels que les sélecteurs de prélèvement, les pompes de circulation du métal liquide et les détecteurs de neutrons. Ces modules peuvent donc être sujet à des pannes ou interruptions de fonctionnement, si bien que la surveillance de toute une région du cœur ou de toute une partie de cette région peut être momentanément interrompue.

Ceci est incompatible avec un fonctionnement continu du réacteur dans de très bonnes conditions de sécurité.

Le but de l'invention est donc de proposer un réacteur nucléaire comportant un cœur constitué par des assemblages combustibles disposés côte à côte et en contact par leurs faces latérales dans une cuve contenant un fluide de refroidissement du réacteur mis en circulation par des moyens de pompage, de façon à traverser le cœur dans la direction longitudinale des assemblages et un dispositif comportant des moyens de repérage et de localisation des assemblages défectueux, par détection de produits de fission dans le fluide de refroidissement, constitué par un ou plusieurs modules de localisation et des conduites de prélèvement de fluide de refroidissement associées à chacun des assemblages, joignant de façon indépendante chacune des zones situées en sortie de chacun des assemblages aux modules de localisation et assurant le transport du fluide de refroidissement depuis la sortie du cœur jusqu'aux modules, le dispositif de prélèvement et de localisation du réacteur devant permettre la surveillance continue de l'ensemble du cœur du réacteur, même si l'un des modules de localisation connaît un arrêt momentané occasionné par une panne.

Dans ce but, ledit dispositif de prélèvement comporte au moins deux modules de localisation totalement indépendants et, pour chacun des

assemblages du cœur, il existe au moins un assemblage voisin, c'est-à-dire disposé au contact du premier assemblage par l'intermédiaire d'une de ses faces latérales, relié par sa conduite de prélèvement à un module de localisation différent du module auquel est relié le premier assemblage par sa conduite de prélèvement.

Afin de bien faire comprendre l'invention, on va maintenant décrire à titre d'exemple non limitatif, en se référant aux figures jointes en annexe, un mode de réalisation d'un réacteur nucléaire suivant l'invention, dans le cas de l'utilisation de deux modules pour surveiller l'ensemble du cœur et dans le cas de l'utilisation de six modules indépendants pour cette surveillance.

La figure 1 représente dans une vue en coupe par un plan vertical, de façon schématique, la cuve du réacteur suivant l'invention renfermant le cœur au-dessus duquel est placé le dispositif de prélèvement et de localisation.

La figure 2 représente un schéma de répartition des assemblages à l'intérieur du cœur montrant les assemblages reliés respectivement à l'un ou à l'autre de deux modules de localisation assurant la surveillance de l'ensemble du cœur.

La figure 3 est un schéma de répartition des assemblages à l'intérieur du cœur, dans le cas où la surveillance du cœur est assurée par six modules de localisation indépendants.

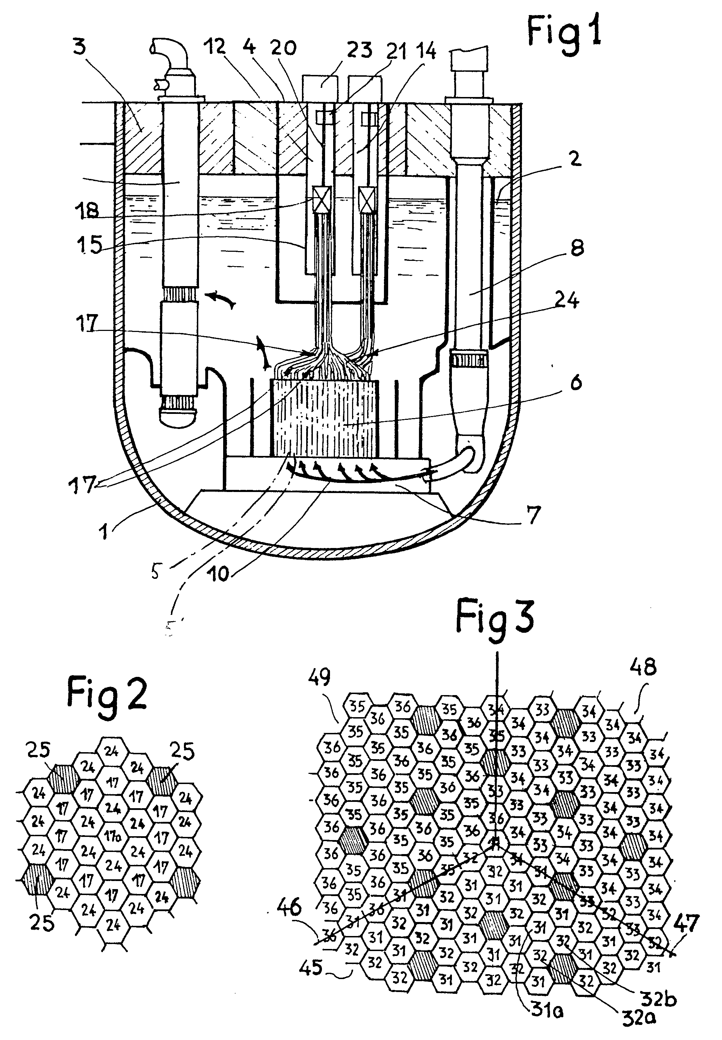

Sur la figure 1 on voit la cuve 1 d'un réacteur nucléaire à neutrons rapides de type intégré.

La cuve est fermée par une dalle de forte épaisseur 3 et contient du sodium liquide qui constitue le fluide de refroidissement jusqu'au niveau 2.

Le cœur 6 du réacteur reposant sur un sommier 7 est constitué par des assemblages de grande longueur par rapport à leurs dimensions transversales disposés verticalement côte à côte de façon que leurs faces latérales soient en contact, deux assemblages voisins étant indiqués par 5, 5'.

On voit sur les figures 2 et 3 la section transversale de ces assemblages qui est de forme hexagonale.

A l'intérieur de la cuve sont également disposées des pompes telles que 8 immergées dans le sodium liquide et permettant la circulation de celui-ci à l'intérieur du cœur, de haut en bas comme figuré par les flèches 10.

Au-dessus du cœur 6 sont disposés des modules 12 et 14 permettant le prélèvement de fluide de refroidissement et la localisation des assemblages défectueux à l'intérieur du cœur.

Nous allons décrire le module 12 de façon plus détaillée, les modules 12 et 14 étant identiques.

Le module comporte un boîtier 15 fixé sur le bouchon tournant 4 et plongeant dans le sodium liquide. Il porte un ensemble de tubes de prélèvement 17 dont une extrémité est en communication avec la partie interne du module. L'autre extrémité de ces tubes 17 débouche au-dessus du cœur dans la zone de sortie du sodium liquide échauffé ayant traversé le cœur.

Chacun des tubes 17 est disposé de façon à déboucher à la verticale d'un assemblage du cœur. Inversement, à chacun des assemblages constituant le cœur, est associé un tube de prélèvement dont l'extrémité d'entrée se trouve à la verticale de l'assemblage, à la sortie de celui-ci.

De cette façon, chacun des conduits 17 peut recueillir le sodium liquide ayant traversé l'assemblage à la verticale duquel il est disposé.

A l'intérieur du boîtier 15 du module 12, ces tubes sont reliés à un sélecteur 18 qui permet de relier successivement chacun des tubes 17 à un tube de transport 20 à l'intérieur duquel est réalisée une aspiration grâce à une pompe 21. Le conduit 20 et la pompe 21 permettent de transporter les prélèvements de sodium liquide effectués successivement à la verticale des assemblages du réacteur à un appareil de mesure 23 grâce auquel on détecte éventuellement la présence de produits de fission dans le prélèvement de sodium liquide.

Un repérage précis de la position du sélecteur permet d'identifier la position des tubes de prélèvement et donc des assemblages pour lesquels on détecte des produits de fission dans le prélèvement de sodium liquide.

Dans le mode de réalisation représenté aux figures 1 et 2, les tubes de prélèvement constituent deux ensembles différents, les tubes de prélèvement constituant l'un des ensembles étant reliés à un premier module de localisation 12 et les tubes de prélèvement constituant le deuxième ensemble étant reliés au module de localisation 14.

Ainsi qu'il est visible à la figure 2, chacun des assemblages constituant le cœur du réacteur est relié par une conduite de prélèvement unique, soit à l'un soit à l'autre des deux modules de localisation.

L'ensemble des conduites de prélèvements reliées au module de localisation 12 étant désigné par le repère 17, l'ensemble des conduites de prélèvements reliées au module de localisation 14 sera désigné par le repère 24.

Sur la figure 2 on a représenté, pour une fraction du cœur disposée autour de la partie centrale de celui-ci, les sections transversales hexagonales des différents assemblages constituant cette partie du cœur, avec l'indication, pour chaque assemblage, de l'ensemble de conduites de prélèvement auquel appartient la conduite de prélèvement associée à cet assemblage.

On voit que la disposition des différentes conduites appartenant à l'ensemble 17 ou à l'ensemble 24 est déterminée de la façon suivante :

Si la conduite de prélèvement de l'assemblage central du cœur 17a est une conduite de l'ensemble 17, les conduites associées aux six assemblages entourant l'assemblage 17 font partie de l'ensemble 24 alors que les douze assemblages entourant les six assemblages précédents sont associés à des conduites 17 et ainsi de suite, chacune des couronnes d'assemblages successives comportant des conduites de prélèvement appartenant successivement à l'ensemble 17 et à l'ensemble 24.

On voit cependant que certains des emplacements sont occupés par des ensembles de commande dont la section est identique à la section d'un assemblage. Aucune conduite de prélèvement n'est disposée à la verticale de ces emplacements occupés par des ensembles de commande 25. Lorsque le réacteur nucléaire est en fonctionnement, le sodium circulant dans le cœur, à l'intérieur de chacun des assemblages suivant la direction longitudinale, il se produit une diffusion du métal liquide à la sortie du cœur qui est accentuée par des courants de direction radiale allant depuis le centre du cœur du réacteur vers la périphérie de celui-ci.

Les prélèvements effectués par les conduites 17 et 24 ne sont donc pas constitués intégralement par du sodium ayant traversé l'assemblage à la verticale duquel ils sont disposés.

Il se produit donc un léger mélange entre le fluide qui a traversé un assemblage quelconque et le fluide ayant traversé les assemblages voisins. Ce mélange peut concerner quelques pour 100 à quelques dizaines de pour 100 de la quantité de métal liquide constituant le prélèvement réalisé à la verticale d'un assemblage, suivant la qualité du prélèvement, la taille de l'assemblage et l'emplacement de celui-ci dans le cœur.

Si l'on se reporte à la disposition des assemblages représentée à la figure 2, on s'aperçoit que tout prélèvement réalisé par l'une des conduites 17 comporte ainsi quelques pour 100 au moins de métal liquide ayant traversé un assemblage associé à une conduite de prélèvement 24 et qu'inversement tout prélèvement effectué avec une conduite 24 comporte quelques pourcent de métal liquide ayant traversé un assemblage associé à une conduite 17.

De cette façon, si par exemple le module 12 connaît une interruption de fonctionnement, le module 14 reçoit grâce aux conduits 24 des prélèvements comportant quelques pourcent de métal liquide ayant traversé les assemblages associés aux conduites de prélèvement 17 reliées au module 12 indisponible.

De cette façon, il reste possible de surveiller l'ensemble du cœur grâce à la répartition des conduites de prélèvement comme représentée à la figure 2.

Sur la figure 3, on voit une portion du cœur d'un réacteur à neutrons rapides refroidi par du sodium liquide dans le cas où l'on utilise pour la détection et la localisation des assemblages défectueux six modules de localisation indépendants analogues aux modules 12 et 14 représentés à la figure 1.

Ces six modules désignés par les repères 31, 32, 33, 34, 35 et 36 sont associés chacun à une portion du cœur correspondant au tiers de celui-ci. Par exemple les modules 31 et 32 sont associés à la portion 45 du cœur comprise dans l'angle dièdre de 120° dont les traces sur le plan de la figure 3 sont les demi-droites 46 et 47.

A l'intérieur de cette portion de cœur, les assemblages combustibles à section hexagonale sont associés à des conduites de prélèvement reliées soit au module 31 soit au module 32, les assemblages associés à une conduite de prélèvement reliée au module 31 portant ce repère 31 et les assemblages associés à une conduite de prélèvement reliée au module de localisation 32 portant le repère 32.

Les assemblages associés à des conduites de prélèvement reliées à l'un ou à l'autre des modules de prélèvement 31 et 32 sont disposés sur des portions de couronnes successives comprises entre les deux plans 46 et 47. Il en est de même des assemblages situés dans la portion 48 du cœur dont les conduites de prélèvement sont reliées soit à un module de localisation 33 soit à un module de localisation totalement indépendant 34.

Les assemblages associés à des conduites reliées au module 33 et les assemblages associés aux conduites liées au module 34 respectivement sont disposées sur des portions de couronnes concentriques entourant le centre du cœur.

Il en est de même également dans la troisième partie 49 du cœur où les assemblages sont reliés soit à un module de localisation 35 soit à un module totalement indépendant 36.

La diffusion du flux de sodium en sortie des assemblages du cœur permet ainsi un mélange du sodium ayant traversé un assemblage quelconque avec quelques pourcent de sodium ayant traversé des assemblages voisins reliés à un module de localisation totalement indépendant.

De cette façon si l'un quelconque des modules de localisation est indisponible, la surveillance de tous les assemblages de la portion de cœur correspondante reste possible, le module restant disponible assurant la détection de produits de fission dans des prélèvements comportant quelques pourcent de sodium provenant des assemblages associés au module indisponible.

Une localisation exacte de l'assemblage défectueux reste possible même si cet assemblage est associé à une conduite reliée à un module de localisation indisponible, puisque toutes les mesures relatives aux produits de fission dans le sodium liquide auront des valeurs très inférieures aux valeurs enregistrées habituellement pour des fuites au niveau d'un assemblage associé à une conduite de prélèvement liée à un module en fonctionnement normal.

Ces valeurs seront par exemple d'un ordre de grandeur inférieur aux valeurs habituelles. En repérant les assemblages pour lesquels on enregistre ces valeurs faibles, par exemple 32a et 32b sur la figure 3, il est facile de déterminer une rupture au niveau de l'assemblage 31a puisque la diffusion du sodium liquide se fait préférentiellement du centre vers la périphérie du cœur.

En cas d'indisponibilité du module de localisation 31, il reste donc possible de déterminer grâce au module de localisation 32 des fuites éventuelles de produits de fission au niveau des assemblages associés à des conduites de prélèvement reliées au module 31.

Il en est évidemment de même dans les autres

parties du cœur, si l'un des deux modules de localisation associés à cette portion du cœur devient indisponible.

Dans l'exploitation des mesures, lorsque l'ensemble des modules de localisation est disponible, on prend en compte évidemment les plus grandes valeurs mesurées qui correspondent à un prélèvement direct au-dessus d'un assemblage présentant une rupture de gaine.

On voit que le principal avantage du dispositif suivant l'invention est de permettre une localisation des assemblages défectueux même lorsqu'un module de localisation (LRG) est en panne.

L'invention ne se limite pas au mode de réalisation qui vient d'être décrit.

C'est ainsi qu'on peut imaginer une répartition quelconque des conduites de prélèvement au-dessus des assemblages du cœur, au lieu d'une répartition en couronnes comme celle qui vient d'être décrite. Cependant, il est nécessaire dans tous les cas d'avoir une disposition telle qu'un assemblage quelconque du cœur soit en contact par une au moins de ses faces avec un autre assemblage dont la conduite de prélèvement est reliée à un module de localisation différent du module auquel est reliée la conduite de prélèvement disposée au-dessus du premier assemblage.

De préférence, le premier assemblage devra être en contact avec au moins un assemblage dont la conduite de prélèvement est reliée à un autre module de localisation par l'intermédiaire d'une de ses faces dirigées vers l'extérieur du cœur. En effet, la diffusion du sodium se fait préférentiellement depuis le centre jusqu'à la périphérie du cœur.

Le dispositif suivant l'invention est applicable également dans le cas d'assemblages dont la section transversale n'est pas hexagonale ; on peut par exemple l'utiliser dans le cas où les assemblages sont répartis suivant une maille carrée.

La structure des modules de localisation peut être quelconque, seule la façon dont ces modules regroupent les conduites de prélèvement des différents assemblages du cœur importe pour la mise en œuvre de l'invention. Le cœur peut être divisé d'une manière quelconque en sous-ensembles contenant une même quantité ou des quantités différentes d'assemblages, à partir du moment où, à chaque zone du cœur surveillée, sont associés au moins deux modules de localisation avec une liaison entre ces modules et les assemblages, par des conduites de prélèvement disposées suivant une répartition permettant un mélange du sodium liquide ayant traversé les assemblages reliés à des modules différents. Pour chacune des zones du cœur surveillées on pourra utiliser 2, 3, 4 ou un nombre supérieur de modules de localisation, suivant la place dont on dispose pour ces modules et la précision de localisation qu'on désire.

Il est cependant préférable d'utiliser un nombre minimum de modules, c'est-à-dire deux modules par zones surveillées.

Enfin, le dispositif suivant l'invention s'applique dans tous les cas où l'on désire détecter très rapidement des assemblages combustibles défectueux dans un réacteur nucléaire à neutrons rapides en service, par prélèvement de fluide de refroidissement dans ce réacteur, qu'il soit du type intégré ou à boucles.

**Revendications**

1. Réacteur nucléaire à neutrons rapides comportant un cœur (6) constitué par des assemblages combustibles (5, 5') disposés côte à côte et en contact par leurs faces latérales dans une cuve (1) contenant un fluide de refroidissement du réacteur mis en circulation par des moyens de pompage (8), de façon à traverser le cœur (6) dans la direction longitudinale des assemblages, et un dispositif comportant des moyens de repérage et de localisation des assemblages défectueux par détection de produits de fission dans le fluide de refroidissement, constitué par un ou plusieurs modules de localisation (12, 14) ainsi que des conduites de prélèvement de fluide de refroidissement (17, 24), chacune associée à un assemblage combustible (5, 5'), joignant de façon indépendante chacune des zones situées en sortie de chacun des assemblages aux modules de localisation et assurant le transport du fluide de refroidissement depuis la sortie du cœur jusqu'aux modules, caractérisé par le fait que ledit dispositif comporte au moins deux modules de localisation totalement indépendants (12, 14) et que, pour chacun des assemblages (5) du cœur, il existe au moins un assemblage voisin (5'), c'est-à-dire disposé au contact du premier assemblage (5) par l'intermédiaire d'une de ses faces latérales, relié par sa conduite de prélèvement (24) à un module de localisation (14) différent du module (12) auquel est relié le premier assemblage (5), par sa conduite de prélèvement (17).

2. Réacteur suivant la revendication 1, caractérisé par le fait que le cœur du réacteur (6) est divisé en au moins deux parties (45, 48, 49) comportant chacune un ensemble d'assemblages (31-32, 33-34, 35-36) dont les conduites de prélèvement sont reliées à l'un ou à l'autre de deux modules de localisation indépendants des modules auxquels sont reliées les conduites de prélèvement associées aux assemblages disposés dans les autres parties du cœur du réacteur.

3. Réacteur suivant la revendication 2, caractérisé par le fait que le cœur du réacteur est divisé en trois parties (45, 48, 49) et que les conduites de prélèvement des assemblages (31-32, 33-34, 35-36) de chacune de ces parties du cœur sont reliées à l'un ou à l'autre de deux modules de localisation, la surveillance de l'ensemble du cœur nécessitant six modules de localisation totalement indépendants.

4. Réacteur suivant l'une quelconque des revendications 1, 2 et 3, caractérisé par le fait que les conduites de prélèvement (17 et 24) reliées à l'un ou à l'autre de deux modules indépendants, sont disposées successivement sur des couronnes ayant pour axes l'axe du cœur (6) du réacteur.

## Claims

1. Fast neutron nuclear reactor comprising a core (6) consisting of fuel assemblies (5, 5') arranged sideby-side and with their lateral faces in contact in a vessel (1) containing a reactor-cooling fluid circulated by means of pumping (8), so as to cross the core (6) in the longitudinal direction of the assemblies, and a device incorporating means for locatang and localising defective assemblies by detecting fission products in the cooling fluid, consisting of one or more localising modules (12, 14) and conduits for abstracting the cooling fluid (17, 24), each being associated with a fuel assembly (5, 5'), independently joining each of the zones situated at the exit of each of the assemblies to the localising modules and ensuring the transport of the cooling fluid from the core exit as far as the modules, characterised in that the said device incorporates at least two completely independent localising modules (12, 14), and, for each of the core assemblies (5), there is at least one neighbouring assembly (5'), that is to say arranged in contact with the first assembly (5) through the intermediacy of one of its lateral faces, which is connected by its abstracting conduit (24) to a localising module (14) which is different from the module (12) to which the first assembly (5) is connected by its sampling conduit (17).

2. Reactor according to claim 1, characterised in that the reactor core (6) is divided into at least two parts (45, 48, 49) each incorporating a set of assemblies (31-32, 33-34, 35-36) whose abstracting conduits are connected to either of two localising modules which are independent of the modules to which are joined the abstracting conduits associated with the assemblies arranged in the other parts of the reactor core.

3. Reactor according to claim 2, characterised in that the reactor core is divided into three parts (45, 48, 49) and the abstracting conduits of the assemblies (31-32, 33-34, 35-36) of each of these parts of the core are joined to either of two localising modules, the surveillance of the whole of the core requiring six completely independent localising modules.

4. Reactor according to any one of claims 1, 2 and 3, characterised in that the abstracting conduits (17 and 24) joined to either of two independent modules are arranged in succession in rings having the axis of the reactor core (6) as their axes.

## Ansprüche

1. Schnellneutronenkernreaktor mit einem Kern (6) bestehend aus mehreren nebeneinander angeordneten Brennelementbündel (5, 5'), die über ihre Seitenflächen in einem Behälter (1) mit einem durch Pumpmittel (8) umlaufenden Kühlmedium des Reaktors in Kontakt sind, so dass es den Kern (6) in Längsrichtung der Brennelementbündel durchströmt, und aus einer Vorrichtung mit Mitteln zur Ortung und Lokalisierung der defekten Brennelementbündel durch Auffinden von Spaltmaterial in dem Kühlmedium, bestehend aus einem oder mehreren Lokalisierungsmoduln (12, 14) sowie aus jeweils einem Brennelementbündel (5, 5') zugeordneten Kühlmediumentnahmeleitungen (17, 24), die jeweils die am Ausgang der jeweiligen Brennelementbündel liegenden Bereiche mit den Lokalisierungsmoduln unabhängig verbinden und die Kühlmediumförderung von dem Austritt aus dem Kern bis zu den Moduln gewährleisten, dadurch gekennzeichnet, dass diese Vorrichtung mindestens zwei vollkommen unabhängige Lokalisierungsmoduln (12, 14) aufweist, und dass für jedes Brennelementbündel (5) des Kerns mindestens ein benachbartes Brennelementbündel (5') vorhanden ist, d. h. das mit dem ersten Brennelementbündel (5) über eine seiner Seitenflächen in Kontakt steht und über seine Entnahmeleitung (24) an ein Lokalisierungsmodul (14) angeschlossen ist, wobei sich dieser von dem über seine Entnahmeleitung (24) mit dem ersten Brennelementbündel (5) verbundenen Modul (12) unterscheidet.

2. Kernreaktor nach Anspruch 1, dadurch gekennzeichnet, dass der Reaktorkern (6) mindestens in zwei Teile (45, 48, 49) mit jeweils einer Gruppe Brennelementbündel (31-32, 33-34, 35-36) unterteilt ist, deren Entnahmeleitungen an den einen oder den anderen von zwei Lokalisierungsmoduln angeschlossen sind, wobei diese von den Moduln mit den angeschlossenen Entnahmeleitungen unabhängig sind, die den in den anderen Teilen des Reaktorkerns angeordneten Brennelementbündel zugeordnet sind.

3. Kernreaktor nach Anspruch 2, dadurch gekennzeichnet, dass der Reaktorkern in drei Teile (45, 48, 49) unterteilt ist, und dass die Entnahmeleitungen der Brennelementbündel (31-32, 33-34, 35-36) von jedem dieser Kernteile an den einen oder den anderen von zwei Lokalisierungsmoduln angeschlossen sind, wobei zur Überwachung des gesamten Kerns insgesamt sechs unabhängige Lokalisierungsmoduln erforderlich sind.

4. Kernreaktor nach einem der Ansprüche 1, 2 und 3, dadurch gekennzeichnet, dass die an den einen oder den anderen der beiden unabhängigen Moduln angeschlossenen Entnahmeleitungen (17 bzw. 24) nacheinander auf Kränze angeordnet sind, die als Achsen die Achse des Reaktorkerns (6) aufweisen.

Fig 1

Fig 2

Fig 3